# EUROPÄISCHE PATENTANMELDUNG

(11) **EP 1 107 022 A2**
(43) Veröffentlichungstag der Anmeldung: **13.06.2001**
(21) Anmeldenummer: 00204210.9
(22) Anmeldetag: 27.11.2000
(51) Int. Cl.: G01T 1/00

(54) **Röntgendetektor mit einer Sensormatrix und einer Szintillatoranordnung**

(30) Priorität: 26.05.2000 DE 10026160; 30.11.1999 DE 19957429
(71) Anmelder: Philips Corporate Intellectual Property GmbH, 52064 Aachen (DE); Koninklijke Philips Electronics N.V., 5621 BA Eindhoven (NL)
(72) Erfinder: Such, Olaf, Dr., Habsburgerallee 11, 52064 Aachen (DE); Morales Serrano, Francisco, Dr., Habsburgerallee 11, 52064 Aachen (DE); Schneider, Stefan, Dr., Habsburgerallee 11, 52064 Aachen (DE); Wieczorek, Herfried, Dr., Habsburgerallee 11, 52064 Aachen (DE); Lauter, Josef, Dr., Habsburgerallee 11, 52064 Aachen (DE)
(74) Vertreter: Gössmann, Klemens

(57) **Zusammenfassung**

Die Erfindung betrifft einen Röntgendetektor 8 mit einer Sensormatrix und einer Szintillatoranordnung 20, bei dem zur Verringerung des Übersprechens in benachbarte Detektorelemente beabstandete Drahtelemente 21 und 22 in Schichten A und B angeordnet werden und wenigstens teilweise Szintillatoren 23 in die gebildeten Gitteröffnungen 24 eingefügt sind.

## Beschreibung

Die Erfindung betrifft einen Röntgendetektor mit einer Sensormatrix und einer Szintillatoranordnung.

Röntgendetektoren werden zur Umwandlung von Röntgenstrahlung in Licht und/oder in detektierbare Ladungsträger verwendet.

In Computertomographie Systemen (CT) und anderen bildgebenden Röntgensystemen durchdringt die von einem Röntgenstrahler ausgesendete Röntgenstrahlung einen zu untersuchenden Patienten und wird der unterschiedlichen Dichte und chemischen Zusammensetzung des zu untersuchenden Gewebes oder der Knochen entsprechend geschwächt. Die Röntgenstrahlung wird im Röntgendetektor in einem szintillierenden Material in Licht umgesetzt. Der Röntgendetektor ist typischerweise aus einem Streustrahlengitter einer darunter angeordneten Szintillatoranordnung und einer darunter befindlichen Sensormatrix aufgebaut. Die Sensormatrix besteht aus einer Vielzahl von lichtempfindlichen Sensoren, wobei ein einzelner Sensor auch als Detektorelement oder Kanal bezeichnet wird. Beim Bestrahlen des Röntgendetektors mit Röntgenstrahlung entstehen gestreute Röntgenphotonen und Streustrahlung im sichtbaren Wellenlängenbereich, was zu einem Übersprechen (Crosstalk) in benachbarte Detektorelemente oder - kanäle führt. Um dieses Übersprechen, wodurch das darzustellende primäre Röntgenbild verfälscht wird, zu reduzieren, passiert die Röntgenstrahlung ein auf den Fokus der Strahlenquelle fokussiertes Streustrahlengitter.

Dadurch erreicht man bei der Detektion der Röntgenphotonen, dass jeweils nur die Röntgenphotonen detektiert werden, die charakteristisch für die Schwächung des durchstrahlten Objektes sind.

Zur weiteren Verringerung des Übersprechanteils am Gesamtsignal wird die von lichtreflektierenden Außenschichten ummantelte Szintillatoranordnung zusätzlich durch röntgenabsorbierende Blenden getrennt, die als Separatoren bekannt sind, so dass schräg einfallende Streustrahlung - sichtbar oder röntgen - absorbiert wird und nicht zum benachbarten Detektorelement gelangt. Diese sind für herkömmliche Einliniendetektoren üblicherweise als weiß eingefärbte Epoxidharzschichten oder als reflektiv(TiO₂) beschichtete Bleche aus schwarzen Metallen (Pb, Wo, Mo) ausgeführt. Die Metalleinlagen erfüllen für Röntgendetektoren mit integrierter Elektronik einen weiteren vordringlichen Zweck, nämlich den Schutz der darunter liegenden Halbleiterstrukturen vor Röntgenstrahlung.

In der WO 98/58389 wird eine Anordnung zur Herstellung großflächiger zweidimensionaler Gitter beschrieben. Dabei wird ein Gitter durch Übereinanderschichten von Metallagen gebildet, in die Löcher hineingeätzt sind, gebildet. Die Öffnungen des sich ergebenden Gitters lassen sich mit Phosphor oder einem anderen Szintillatormaterial füllen.

Die großflächigen Gitter werden durch puzzleartige Verbindungen mehrerer Teilgitter realisiert. Durch die lithographische Herstellung der Metallagen läßt sich eine hohe Genauigkeit erreichen. Die übereinandergeschichteten Metallagen werden mittels in entsprechende Löcher einzuführende Stifte fixiert.

Ein derartiges Gitter wird mit hohem Herstellungsaufwand gefertigt. Jede Metalllage erfordert bei der Herstellung eine eigene Maske. Außerdem ist ein Einbringen von Szintillatorblöcken in derartig gebildete Gitter aufwendig, da einerseits die Größenordnung des beschriebenen Gitters auf eine sehr feine Auflösung abzielt und andererseits die Metalllagen steile Kanten aufweisen, wodurch ein Einführen von Metallblöcken erschwert wird.

Aufgabe der Erfindung ist es einen Röntgendetektor anzugeben, bei dem das Übersprechen der Streustrahlung in einem in zwei Raumrichtungen segmentierten Röntgendetektor verringert wird, der sich mit hoher Genauigkeit und in hoher Stückzahl zu vertretbaren Preisen herstellen läßt. Außerdem ist es Aufgabe einen Szintillator anzugeben bei dem die darunterliegende Halbleiterstrukturen vor Röntgenstrahlung geschützt werden.

Die Aufgabe wird dadurch gelöst, dass mehrere Schichten beabstandeter Drahtelemente angeordnet sind, wenigstens teilweise zwischen den Drahtelementen Szintillatoren aufzunehmen.

Dazu wird zunächst ein Gitter aus Drahtlagen hergestellt, wobei eine webeähnliche Technik verwendet wird. Der Draht ist dabei aus einem Metall mit hoher Röntgenabsorption zu wählen, etwa Molybdän oder Wolfram. Mehrere Drahtelemente mit entsprechender Länge werden in einer Schicht angeordnet. Eine darüber anzuordnende Schicht wird bevorzugt in einem Winkel von 90° zu den Drahtelementen der darunterliegenden Schicht angeordnet. Durch mehrfaches Übereinanderschichten derartiger Drahtelementeschichten ergibt sich ein in zwei Raumrichtungen segmentiertes Gitter.

In einer vorteilhaften Ausgestaltung der Erfindung wird in die sich ergebenden Löcher jeweils ein Szintillatorelement eingebracht.

Da alle Löcher gleiche Abmessungen aufweisen, ist es einfach und kostengünstig zu realisieren, Szintillatorelemente herzustellen, die sich beispielsweise in diese Löcher einpressen lassen. Dadurch ergibt sich eine Szintillatoranordnung, bei der die einzelnen Detektorelemente der darunter angeordneten Sensormatrix durch die Drahtelemente von einander separiert werden.

Diese Art der Szintillatoranordnung läßt sich in vielen denkbaren Dimensionen realisieren, wobei die Szintillatoranordnung eine hohe Stabilität behält. Die Szintillatoranordnung läßt sich an Krümmungen, wie sie bei CT-Bögen auftreten, anpassen.

Wegen der geringen Höhe der Szintillatoranordnung ist es nicht zwingend erforderlich, das so gebildete Gitter auf den Fokus einer Strahlungsquelle zu fokussieren.

Für ein kombiniertes Streustrahlengitter mit Szintillatoranordnung wird ein aus Drahtelementen bestehendes Gitter mit entsprechend größeren Dimensionen hergestellt. Dabei ist es zweckmäßig das Gitter auf den Fokus der Strahlungsquelle zu fokussieren. Dazu wird der Abstand zwischen den Drahtelementen in den aufeinanderfolgen Schichten entsprechend des Strahlungswinkels verändert. Der Abstand der Drahtelemente in den oberen Schichten des Gitters muß somit geringer sein, als der Abstand der Drahtelemente in den unteren Lagen oder Schichten des Gitters. Oben und unten bezieht sich hierbei auf das Auftreffen der Röntgenstrahlen. Das heißt, die Schicht, die zur Strahlungsquelle am dichtesten angeordnet ist, weist den geringsten Abstand zwischen den Drahtelementen auf und die Schicht die am weitesten von der Strahlungsquelle entfernt ist oder am dichtesten zur Sensormatrix angeordnet ist, weist den größten Abstand zwischen den Drahtelementen auf. Die räumliche Form einer derartigen Gitteröffnung bildet einen Kegelstumpf mit quadratischer Grundfläche.

In den unteren Bereich des so gebildeten Gitters werden, wie ober beschrieben, Szintillatorblöcke oder Szintillatorelemente eingefügt. Damit erhält man ein kombiniertes Gitter, welches in Verbindung mit der darunter anzuordnenden Sensormatrix einen Röntgendetektor bildet, der in seinen Abmessungen flexibel und bei geringen Produktionskosten herstellbar ist. Das Anordnen der Drahtelemente zu einem erfindungsgemäßen Gitter kann mit großer Präzision erfolgen.

Die Drahtelemente könnten vorteilhaft auch aus Kunststoff hergestellt werden, der Röntgenstrahlen absorbierende Stoffe enthält. Ebenso kann dieses Gittergewebe oder die Schichten mit Drahtelementen in einem Spritzgußverfahren hergestellt werden. Der Draht weist vorzugsweise einen runden Querschnitt auf, bei beispielhaften Querschnittsabmessungen um 100 µm, wobei aber jeder andere verfügbare Querschnitt einsetzbar ist.

Die Gitterstrukturabmessung im Ausführungsbeispiel sei etwa 1,5 mm mal 1,5 mm. Eine Fokussierung ist wegen der geringen Höhe einer solchen Szintillatoranordnung zunächst nicht erforderlich, kann aber ebenfalls realisiert werden.

Das Gitter für die Szintillatoranordnung oder auch ein mit einem Streustrahlengitter kombiniertes Gitter kann plane oder leicht gekrümmte Öffnungsseiten aufweisen und läßt sich daher für alle bekannten Detektortechniken verwenden bzw. anpassen. Eine typische Höhe für eine solche Szintillatoranordnung ist etwa 4 mm, so dass im Vergleich zu einem Streustrahlengitter eine deutlich geringere Aufbauhöhe erforderlich ist. In die Gitteröffnungen werden die zu kleinen Würfeln geschnittenen oder gepreßten Szintillatorelemente eingefügt. Die Abmessungen sind beispielsweise 1,4 mm x 1,4 mm x 4 mm. Mit diesen Abmessungen ist die Genauigkeit der Struktur durch das Gitter bestimmt. Das Gitter wird nachdem Einfügen der Szintillatorelemente mit einem weißen lichtreflektierenden Kleber oder Lack z.B. Epoxidharz vergossen. Die Mehrheit der Oberflächen der Drahtelemente wird dadurch reflektieren, nur an den direkten Stoßkanten der Drähte mit den Szintillatorwürfeln oder -elementen kann dies vermindert sein. Wenn man die Gitterstruktur selbst reflektierend beschichtet oder aus weißem Material herstellt, kann man diesen Nachteil kompensieren.

Eine in zwei Raumrichtungen segmentierte Szintillatorstruktur kann auf diese Art effizient hergestellt werden. Die Genauigkeitsanforderungen, die an die Regelmäßigkeit der Elemente gestellt sind, können bislang nicht durch einen Schneideprozess bei der Szintillatorunterteilung erreicht werden. Die Einbettung in ein Gitter zwingt auch bei geringeren Anforderungen an die Einzelmaße der Szintillatorelemente die Struktur in ein regelmäßiges Raster, dessen Genauigkeit leicht kontrollierbar ist.

Weiter eröffnet es die Möglichkeit, senkrecht in den Trennlagen oder Speratoren, die durch die Drahtelemente gebildet werden, einfallende Strahlung zu absorbieren, so dass eine evtl. vorhandene Halbleiterstruktur, die sich dort befindet, geschützt wird.

In einer weiteren Ausführungsform erweist es sich als vorteilhaft, den Abstand zwischen einzelnen Drahtelementen in einer Schicht zu variieren. Röntgendetektoren weisen gegebenenfalls eine unterschiedliche Auflösung aus, so dass beispielsweise im Randbereich des Röntgendetektors und demzufolge auch im Randbereich des Streustrahlengitters eine gröbere Auflösung möglich ist. Dazu müßten die Drahtelemente an den Randbereichen der einzelnen Schichten einen größeren Abstand zueinander aufweisen, als im mittigen Bereich, in dem die Auflösung des Röntgendetektors am größten ist.

Die Anordnung mehrerer aufeinanderfolgender Schichten mit gleicher Ausrichtung der Drahtelemente hat den Vorteil, dass Streustrahlen für alle Einfallswinkel absorbiert werden. Bei einem gleichmäßig ausgebildeten Gitter, bei dem die Ausrichtung der Drahtelemente regelmäßig wechselt, können Streustrahlen mit einem bestimmten Einfallswinkel das Gitter durch die zwischen den Drahtelementen der einzelnen Schichten befindlichen Lücken passieren. Bei Vermeidung einer gewissen Regelmäßigkeit bei der Ausrichtung des Gitters ist ein zufälliges Passieren von Streustrahlen mit bestimmten Einfallswinkel ausgeschlossen.

Um eine gute Stapelfähigkeit der einzelnen Schichten zu erreichen, bietet es sich an, die Drahtelemente in einen für Röntgenstrahlen durchlässigen Kunststoff einzulassen, so dass jede Schicht ebene Oberflächen aufweist. Die Stärke der Schichten sollte den Durchmesser oder die Querschnittsabmessungen der Drahtelemente jedoch nicht übersteigen. Ebenfalls können die Schichten von Drahtelementen in einen flüssigen, für Röntgenstrahlung durchlässigen Hilfsstoff eingelassen werden, ohne ausgefüllte Schichten auszubilden. Das Gitter wird aus dem Hilfsstoff entfernt, bevor dieser aushärtet. Damit erreicht man ein Verkleben der Drahtelemente. Für ein derartiges Verkleben der Drahtelemente erweist sich ein runder Querschnitt der Drahtelemente als besonders vorteilhaft, da die Auflagefläche zwischen den Drahtelemente besonders klein ist, so dass eine gute Klebeverbindung hergestellt werden kann. Beim Verschweißen oder Verlöten der Drahtelemente kann ein vier- oder mehreckiger Querschnitt vorteilhaft sein, da hier mehr Material und somit mehr Fläche zum Verbinden zur Verfügung steht.

Vorteilhaft bei der erfindungsgemäßen Ausgestaltung des Streustrahlengitters ist die hohe Stabilität und die geringere Schwingneigung des sich ergebenden Streustrahlengitters. Auch die Flexibilität bei der Anpassung des Streustrahlengitters an die Auflösung des Röntgendetektors erweist sich gegenüber anderen Streustrahlenabsorbern als großer Vorteil.

Die Aufgabe wird auch mit einem Röntgenuntersuchungsgerät mit einem Röntgendetektor gelöst, bei dem das Streustrahlengitter und/oder die Szintillatoranordnung Schichten beabstandeter Drahtelemente enthält.

Ausführungsbeispiele der Erfindung werden im folgenden anhand der Zeichnung näher erläutert. Es zeigen:
- Fig. 1: Computertomograph mit über dem Detektor angeordneten Gitter
- Fig. 2: Ansicht einer Szintillatoranordnung mit Drahtelementen
- Fig. 3: Gitter mit Szintillatoren in Ansicht von oben
- Fig.4: fokussiertes Streustrahlengitter mit Szintillatoranordnung

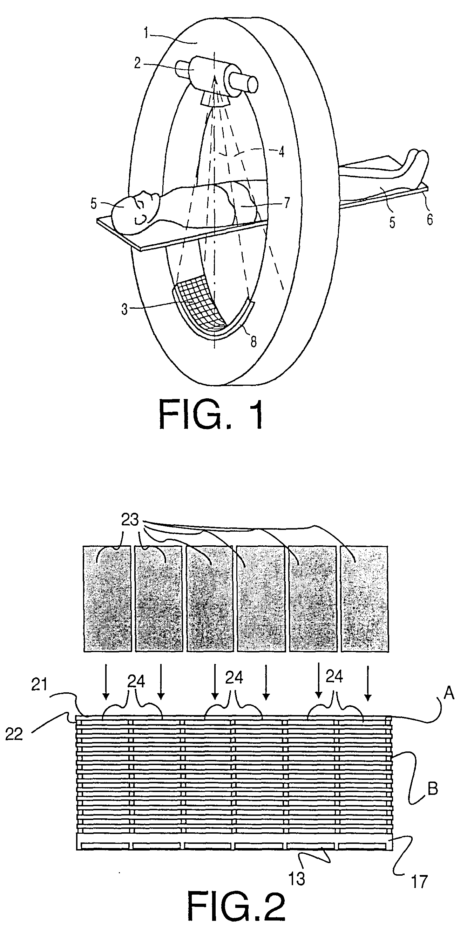

Figur 1 zeigt einen Computertomographen mit einer Gantry oder einem Computertomographiebogen 1 an der eine Strahlungsquelle 2 angeordnet ist. Der Röntgendetektor 8 mit dem darüber angeordneten Streustrahlengitter 3 ist der Strahlungsquelle 2 gegenüber angeordnet. In den Strahlengang 4 wird ein Patient 5 auf einer Pritsche 6 liegend eingebracht. Der Computertomographiebogen 1 dreht sich um den Patienten 5. Dabei wird ein Untersuchungsbereich 7 von allen Seiten durchleuchtet. Der Patient 5 wird in horizontaler Richtung oder in Richtung seiner Längsachse durch den sich drehenden Computertomographiebogen 1 geschoben, so dass mittels mehrerer Querschnittsbilder ein Volumenbild aufgenommen wird. Bei zweidimensionalen Röntgendetektoren 8 ist der Bereich, der mit einer Drehung gescannt wird, wesentlich größer als bei einzeiligen Röntgendetektoren. Dadurch kann der Patient 5 schneller durch die Gantry geschoben werden.

Figur 2 zeigt eine Szintillatoranordnung 20 mit darunter angeordneter Sensormatrix 17. Die Szintillatoranordnung 20 ist aus Schichten beabstandeter Drahtelemente 21 und 22 aufgebaut. Dabei sind die Drahtelemente 21 der obersten Schicht A in eine der zwei Raumrichtungen ausgerichtet. Die darunter angeordnete Schicht B enthält beabstandete Drahtelemente 22 die in einem Winkel von etwa 90 ° zu der obersten Schicht angeordnet sind. Durch mehrfache Schichtung derartig ausgerichteter Drahtelementeschichten entsteht ein Gitter. In die Gitteröffnungen 24 werden Szintillatorblöcke 23 eingefügt. Die Sensormatrix 17 enthält Photosensoren 13.

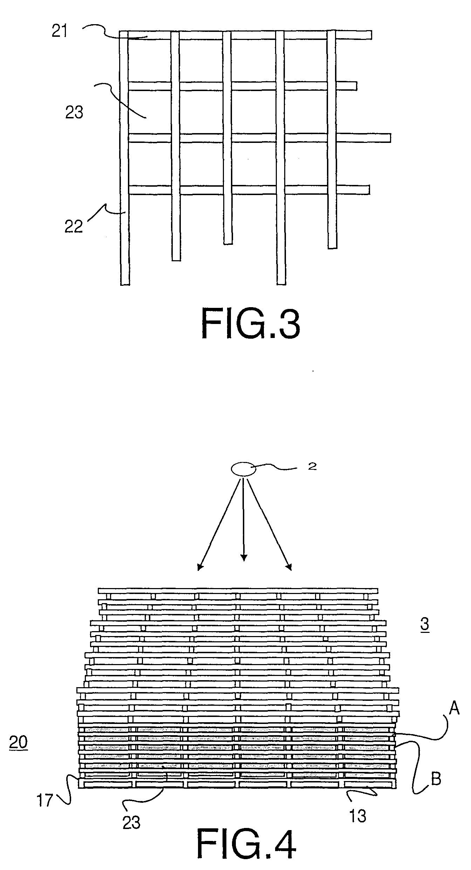

Figur 3 zeigt einen Ausschnitt eines derartigen Gitters von oben. Es sind hier jeweils eine Schicht Drahtelemente 21 in Raumrichtung A und eine Schicht Drahtelemente 22 in Raumrichtung B dargestellt. In die Gitteröffnungen sind Szintillatorelemente 23 eingefügt.

Figur 4 zeigt ein kombiniertes Gitter aus Szintillatoranordnung 20 und Streustrahlengitter 3. Dabei ist das Streustrahlengitter 3 auf die Strahlungsquelle 2 fokussiert und die Szintillatoranordnung 20 nicht. In die Szintillatoranordnung 20 sind die Szintillatorelemente 23 eingefügt.

Es ist auch möglich aufeinanderfolgende Schichten in gleiche Raumrichtungen auszurichten.

## Patentansprüche

1. Röntgendetektor (8) mit einer Sensormatrix (17) und einer Szintillatoranordnung (20), dadurch gekennzeichnet, dass mehrere Schichten (A, B) beabstandeter Drahtelemente (21, 22) derart angeordnet sind, wenigstens teilweise zwischen den Drahtelementen (21, 22) Szintillatoren (23) aufzunehmen.

2. Röntgendetektor (8) nach Anspruch 1,
dadurch gekennzeichnet,
dass die Schichten, insbesondere parallel zueinander angeordneter Drahtelemente winklig zueinander angeordnet sind und ein derart gebildetes Gitter zur Aufnahme von separaten Szintillatorelementen (23) vorgesehen ist.

3. Röntgendetektor nach Anspruch 1,
dadurch gekennzeichnet,
dass das Gitter auf einen Fokus eines Röntgenstrahler (2) fokussiert ist.

4. Röntgendetektor nach Anspruch 1,
dadurch gekennzeichnet,
dass das Gitter an die Krümmung eines Computertomographiebogens (1) angepasst ist.

5. Röntgendetektor nach Anspruch 1,
dadurch gekennzeichnet,
dass die Drahtelemente und die teilweise dazwischen angeordneten Szintillatorblöcke mit einem für Röntgenstrahlung durchlässigen Stoff fixiert sind.

6. Röntgendetektor nach Anspruch 1,
dadurch gekennzeichnet,
dass die Drahtelemente für sichtbares Licht reflektierend sind.

7. Röntgendetektor nach Anspruch 1,
dadurch gekennzeichnet,
dass die Drahtelemente der Schichten zu einem Drahtgewebe verwoben sind.

8. Röntgendetektor nach Anspruch 1,
dadurch gekennzeichnet,
dass, die Drahtelemente und/oder wenigstens Teile der Gitterstruktur mittels Spritzguss herstellbar sind.

9. Röntgendetektor nach Anspruch 1,
dadurch gekennzeichnet,
dass mittels in Schichten angeordneter beabstandeter Drahtelemente ein Streustrahlengitter (3) aufgebaut ist.

10. Röntgenuntersuchungsgerät mit einem Röntgendetektor nach den Ansprüchen 1 bis 10.

11. Szintillatoranordnung mit mehreren Schichten (A, B) beabstandeter Drahtelemente (21, 22), die angeordnet sind, wenigstens teilweise zwischen den Drahtelementen (21, 22) Szintillatoren (23) aufzunehmen.
